# EUROPEAN PATENT APPLICATION

(11) **EP 4 790 598 A1**
(43) Date of publication of application: **12.08.2026**
(21) Application number: 26152697.4
(22) Date of filing: 19.01.2026
(51) Int. Cl.: G06N 10/20, G06N 10/70

(54) **COMPUTER PROGRAM, QUANTUM GATE CALIBRATION METHOD, AND INFORMATION PROCESSING APPARATUS**

(30) Priority: 05.02.2025 JP 2025017955
(71) Applicant: FUJITSU LIMITED, Kawasaki-shi, Kanagawa 211-8588 (JP)
(72) Inventor: SUGIYAMA, Takanori, Kawasaki-shi, 211-8588 (JP)
(74) Representative: Haseltine Lake Kempner LLP

(57) **Abstract**

An information processing apparatus acquires error data indicating an error of a first quantum gate. The information processing apparatus generates, using an approximation function that linearly approximates an influence of an additional quantum gate, which is to be added to the first quantum gate, on an operation of the first quantum gate, a linear equation which includes a variable corresponding to the additional quantum gate and indicates a relationship in which the error is canceled by the additional quantum gate. The information processing apparatus determines a second quantum gate corresponding to the additional quantum gate by solving the linear equation for the variable. The information processing apparatus determines a second quantum gate corresponding to the additional quantum gate by solving the linear equation for the variables.

## Description

### FIELD

The present disclosure relates to a computer program, a quantum gate calibration method, and an information processing apparatus.

### BACKGROUND

A quantum gate quantum computer executes various quantum operations on quantum bits (hereinafter, "qubits". A quantum computer initializes qubits, applies quantum gates to the qubits, and measures the values of the qubits. Quantum computers are implemented using physical platforms such as superconducting quantum circuits, semiconductor quantum dots, diamond nitrogen vacancy (NV) centers, and nuclear magnetic resonance (NMR) molecules.

Implemented quantum computers usually have errors where the behavior of a quantum operation deviates from ideal behavior. The user may perform calibration to adjust the values of control parameters of a quantum computer to reduce errors. As one example, the quantum computer may have a control parameter for changing the waveform of the microwave pulse signal used to irradiate a qubit.

There is a technique for reducing errors in a quantum computer by generating a plurality of different quantum circuits that are logically equivalent and measuring the plurality of quantum circuits. There is also a technique for making a quantum gate array equivalent to an identity quantum gate by inserting quantum gates of the same type between a plurality of unitary quantum gates included in the quantum gate array. In addition, there is a technique of reducing readout errors of qubits by inserting a random Pauli quantum gate immediately before measurement of a qubit in a quantum circuit. In yet another technique, a certain quantum gate and another quantum gate with the opposite function to the certain quantum gate are inserted into a quantum circuit. See, for example, the following literatures.
International Publication Pamphlet No. WO 2021/101829 U.S. Patent No. 11,348,027
International Publication Pamphlet No. WO 2022/129204 U.S. Patent Application Publication No. 2023/0176935

The errors of a quantum gate to be calibrated may include an error component that is difficult to cancel out by merely changing the values of control parameters of the quantum gate. This means that errors may remain in the calibrated quantum gate.

### SUMMARY

It is desirable to improve the calibration accuracy of quantum gates.

In one aspect, there is provided a computer program that causes a computer to perform a process including: acquiring error data indicating an error of a first quantum gate; generating, using an approximation function that linearly approximates an influence of an additional quantum gate, which is to be added to the first quantum gate, on an operation of the first quantum gate, a linear equation which includes a variable corresponding to the additional quantum gate and indicates a relationship in which the error is canceled by the additional quantum gate; and determining a second quantum gate corresponding to the additional quantum gate by solving the linear equation for the variable.

### BRIEF DESCRIPTION OF DRAWINGS

The invention is described, by way of example only, with reference to the following drawings, in which:
FIG. 1 is a diagram illustrating an information processing apparatus according to a first embodiment;
FIG. 2 depicts example hardware of an information processing system according to a second embodiment;
FIG. 3 depicts one example of a quantum circuit in which a calibration quantum gate has been added to a target quantum gate;
FIG. 4 depicts one example of addition of calibration quantum gates to an X90 gate;
FIG. 5 depicts one example of addition of calibration quantum gates to an X180 gate;
FIG. 6 is a graph depicting example calibration of an X90 gate by first order approximation;
FIG. 7 is a graph depicting example calibration of an X180 gate by first order approximation;
FIG. 8 depicts example classifications of error components of a ZX90 gate;
FIG. 9 depicts one example of a transform coefficient vector with consideration to non-commutativity;
FIG. 10 depicts one example of addition of calibration quantum gates to a ZX90 gate;
FIG. 11 depicts an example expansion of a first calibration quantum gate;
FIG. 12 depicts an example expansion of a second calibration quantum gate;
FIG. 13 depicts an example expansion of a third calibration quantum gate;
FIG. 14 depicts an example expansion of the fourth calibration quantum gate;
FIG. 15 is a graph depicting an example of a relationship between a pre-calibration error and a post-calibration error;
FIG. 16 is a graph depicting an example reduction in a post-calibration error;
FIG. 17 is a block diagram depicting example functions of an information processing apparatus; and
FIG. 18 is a flowchart depicting an example procedure of quantum gate calibration.

### DESCRIPTION OF EMBODIMENTS

Several embodiments will be described below with reference to the drawings.

### (a) First Embodiment

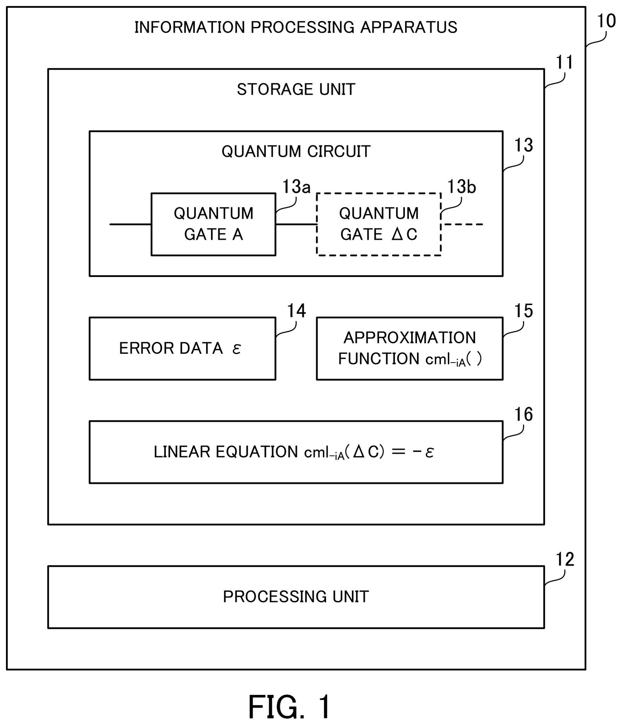

FIG. 1 is a diagram illustrating an information processing apparatus according to a first embodiment. The information processing apparatus 10 according to the first embodiment calibrates a quantum gate executed by a quantum computer. As one example, the information processing apparatus 10 is a von Neumann-type classical computer. The information processing apparatus 10 may be a client apparatus or a server apparatus. The information processing apparatus 10 may also be referred to as a "computer" or a "quantum gate calibration apparatus".

The information processing apparatus 10 includes a storage unit 11 and a processing unit 12. The storage unit 11 may be a volatile memory such as a random access memory (RAM). The storage unit 11 may be non-volatile storage, such as a hard disk drive (HDD) or a solid state drive (SSD).

As examples, the processing unit 12 is a processor such as a central processing unit (CPU), a graphics processing unit (GPU), or a digital signal processor (DSP). However, the processing unit 12 may include an electronic circuit such as an application specific integrated circuit (ASIC) or a field programmable gate array (FPGA). As one example, the processor executes a program stored in a memory, such as RAM. The processor may be referred to as "processor circuitry". A group of processors may be referred to as a "multiprocessor" or simply as a "processor". Different processes out of the plurality of processes described below may be executed by different processors.

The storage unit 11 stores error data 14 indicating an error of a quantum gate 13a implemented in a quantum computer. The quantum gate 13a is a quantum gate to be calibrated. The error of the quantum gate 13a indicates the degree to which an operation of the quantum gate 13a deviates from the ideal value. The quantum gate 13a may be a one-input quantum gate that operates on one qubit or a multi-input quantum gate that operates on two or more qubits.

The ideal value of the quantum gate 13a may be expressed as a generator (or "Lindbladian"). The generator corresponds to a matrix logarithm of a unitary matrix indicating a transformation of a quantum state. The error of the quantum gate 13a may be expressed as a generator error indicating a deviation in the generator.

The information processing apparatus 10 may generate the error data 14 using a quantum computer, or may acquire the error data 14 from another information processing apparatus. As one example, the information processing apparatus 10 causes the quantum computer to execute the quantum gate 13a and acquires test data indicating an execution result of the quantum gate 13a. The information processing apparatus 10 evaluates the error by analyzing the test data and generates the error data 14. Examples of the error evaluation method include quantum process tomography, gate set tomography (GST), Hamiltonian error amplifying tomography (HEAT), and randomized benchmarking (RB).

The processing unit 12 performs calibration for reducing the error of the quantum gate 13a in keeping with the error data 14. In the first embodiment, the processing unit 12 reduces the error by adding an additional quantum gate to the quantum gate 13a. The processing unit 12 determines a quantum gate 13b corresponding to this additional quantum gate, and adds the quantum gate 13b to the quantum gate 13a. As a result, a quantum circuit 13 including the quantum gates 13a and 13b is generated. The quantum gate 13b may include a former-stage quantum gate to be added before the quantum gate 13a or may include a latter-stage quantum gate to be added after the quantum gate 13a.

When determining the quantum gate 13b, the processing unit 12 generates a linear equation 16 using an approximation function 15. The approximation function 15 linearly approximates the influence of the additional quantum gate on the action of the quantum gate 13a. A first order approximation is performed here since two matrices corresponding to two quantum gates that are connected in series are usually not commutative.

As one example, the matrices M₁ and M₂ may be non-commutative where the product M₁ × M₂ does not match the product M₂ × M₁. When the matrices M₁ and M₂ are non-commutative, the product e^{M1} × e^{M2} of the matrix index e^{M1} of the matrix M¹ and the matrix index e^{M2} of the matrix M² does not match e^{M1 + M2}. This means that even when an additional quantum gate with a generator that is the inverse of the generator error of the quantum gate 13a is added to the quantum gate 13a, an uncanceled generator error may remain in a composite quantum gate in which the quantum gate 13a and the additional quantum gate are combined.

The effect of the additional quantum gate on the operation of the quantum gate 13a is generally non-linear. This means it is not easy to precisely calculate an additional quantum gate capable of cancelling out the error of the quantum gate 13a. For this reason, the processing unit 12 uses the approximation function 15. The processing unit 12 may decompose a matrix (for example, a generator) indicating the quantum gate 13a into a plurality of eigenvalues and a plurality of projection matrices by eigenvalue decomposition or spectral decomposition. The processing unit 12 may generate the approximation function 15 using a plurality of eigenvalues and a plurality of projection matrices.

The linear equation 16 includes variables corresponding to the additional quantum gate and indicates a relationship in which the error of the quantum gate 13a is cancelled by the additional quantum gate. As one example, the linear equation 16 indicates that the effect of the additional quantum gate, when transformed by the approximation function 15, matches the error indicated by error data 14 with its sign inverted.

A candidate for the additional quantum gate may be a rotation gate that rotates a quantum state by a certain angle around a certain rotational axis. The variables included in the linear equation 16 may indicate the additional quantum gate to be used or may specify the rotational angle of the additional quantum gate. The linear equation 16 may be expressed using a coefficient matrix and a right-hand vector.

The processing unit 12 solves the linear equation 16 for variables. The processing unit 12 determines the quantum gate 13b corresponding to the additional quantum gate from the values of the variables in a solution. The processing unit 12 may analytically solve the linear equation 16 by calculating an inverse matrix of the coefficient matrix. The processing unit 12 may calculate an approximate solution of the linear equation 16 using a linear solver in an iterative method.

The processing unit 12 may determine a value of a control parameter for controlling the operation of the quantum gate 13b from the solution of the linear equation 16. As one example, when a quantum gate is implemented using a microwave pulse signal, the processing unit 12 may determine control parameter values related to a waveform, such as a time width and/or an amplitude, of the microwave pulse signal from a rotational angle of the quantum gate 13b. The waveform area of a microwave pulse signal typically corresponds to the rotational angle.

After calibration according to this first embodiment, a quantum computer will execute the pair of the quantum gate 13a and the quantum gate 13b instead of executing the quantum gate 13a alone. The addition of the quantum gate 13b to the quantum gate 13a may be automatically performed by the quantum computer, may be indicated to the quantum computer by the information processing apparatus 10 at each execution, or may be indicated to the quantum computer by another information processing apparatus for each execution. The processing unit 12 outputs a calibration result including information on the quantum gate 13b. The processing unit 12 may store the calibration result in non-volatile storage, display the calibration result on a display apparatus, or transmit the calibration result to another information processing apparatus.

As described above, the information processing apparatus 10 according to the first embodiment acquires the error data 14 indicating the error of the quantum gate 13a. The information processing apparatus 10 generates a linear equation 16 using the approximation function 15. The approximation function 15 linearly approximates the influence of an additional quantum gate to be added to the quantum gate 13a on the operation of the quantum gate 13a. The linear equation 16 includes variables corresponding to the additional quantum gate and indicates a relationship whereby an error is cancelled by the additional quantum gates. The information processing apparatus 10 determines the quantum gate 13b corresponding to the additional quantum gate by solving the linear equation 16 for the variables.

By doing so, the error of the quantum gate 13a implemented in the quantum computer is reduced. In addition, an error component that is difficult to cancel out only by changing control parameter values of the quantum gate 13a is also reduced, which improves the calibration accuracy. By using the approximation function 15, a relationship whereby an additional quantum gate cancels out the error is expressed simply using a linear equation 16. This makes it possible for the information processing apparatus 10 to efficiently determine the quantum gate 13b.

### (b) Second Embodiment

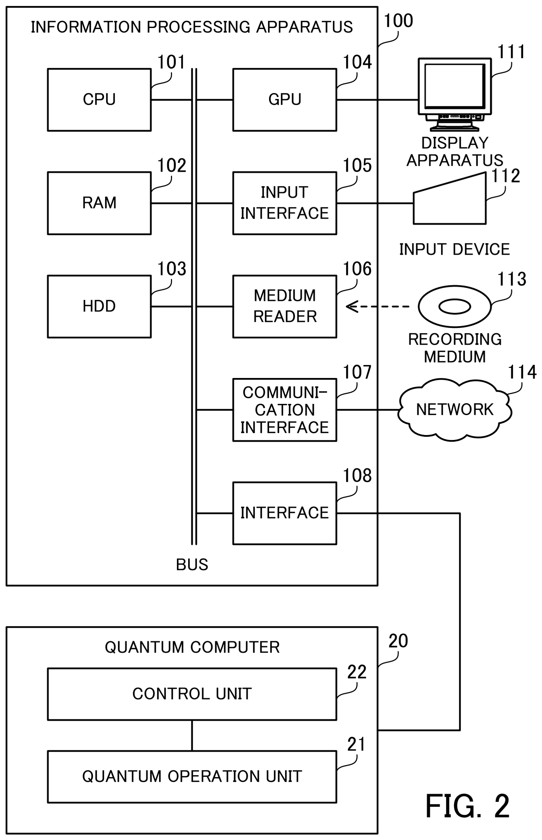

FIG. 2 depicts example hardware of an information processing system according to a second embodiment. The information processing system according to the second embodiment includes an information processing apparatus 100 and a quantum computer 20. The information processing apparatus 100 is a von Neumann-type classical computer. The information processing apparatus 100 calibrates a quantum gate implemented in the quantum computer 20. The information processing apparatus 100 corresponds to the information processing apparatus 10 in the first embodiment.

The information processing apparatus 100 includes a CPU 101, a RAM 102, an HDD 103, a GPU 104, an input interface 105, a medium reader 106, a communication interface 107, and an interface 108. The CPU 101 corresponds to the processing unit 12 in the first embodiment. The RAM 102 or the HDD 103 corresponds to the storage unit 11 in the first embodiment.

The CPU 101 is a processor that executes instructions of a program. The CPU 101 loads a program and data from the HDD 103 into the RAM 102 and executes the program. The information processing apparatus 100 may include a plurality of processors.

The RAM 102 is a volatile semiconductor memory that temporarily stores a program to be executed by the CPU 101 and data used in computation by the CPU 101. The information processing apparatus 100 may include a volatile memory of a type aside from RAM.

The HDD 103 is non-volatile storage that stores software programs, such as an operating system, middleware, and application software, as well as other data. The information processing apparatus 100 may include another type of non-volatile storage, such as an SSD or flash memory.

The GPU 104 performs image processing in cooperation with the CPU 101, and outputs an image to a display apparatus 111 connected to the information processing apparatus 100. As examples, the display apparatus 111 is a cathode ray tube (CRT) display, a liquid crystal display, an organic electro luminescence (EL) display, or a projector. The GPU 104 may be used as a general purpose computing on graphics processing unit (GPGPU). The GPU 104 is capable of executing a program in accordance with an instruction from the CPU 101. The information processing apparatus 100 may include a volatile semiconductor memory aside from the RAM 102 as a GPU memory.

The input interface 105 receives an input signal from an input device 112 connected to the information processing apparatus 100. As examples, the input device 112 is a mouse, a touch panel, or a keyboard. A plurality of input devices may be connected to the information processing apparatus 100.

The medium reader 106 is a reading device that reads a program and data recorded on a recording medium 113. As examples, the recording medium 113 is a magnetic disk, an optical disk, or semiconductor memory. Magnetic disks include a flexible disk (FD) and an HDD. Optical discs include a compact disc (CD) and a digital versatile disc (DVD). The medium reader 106 copies a program and data read from the recording medium 113 onto another recording medium, such as the RAM 102 or the HDD 103. A program that has been read out may be executed by the CPU 101.

The recording medium 113 may be a portable recording medium. The recording medium 113 may be used for distribution of programs and data. The recording medium 113 and the HDD 103 may be referred to as a "computer-readable recording medium".

The communication interface 107 communicates with other information processing apparatuses via a network 114. The communication interface 107 may be a wired communication interface connected to a wired communication apparatus, such as a switch or a router, or may be a wireless communication interface connected to a wireless communication apparatus, such as a base station or an access point.

The interface 108 is connected to the quantum computer 20. The interface 108 transmits a command to the quantum computer 20 in response to an instruction from the CPU 101. The interface 108 receives the execution result of the command from the quantum computer 20 and stores the received execution result in the RAM 102.

The quantum computer 20 includes a quantum operation unit 21 and a control unit 22. The quantum operation unit 21 includes a plurality of qubits. The quantum operation unit 21 executes quantum operations, such as initialization of qubits, execution of quantum gates on qubits, and measurement of qubits, in response to instructions from the control unit 22. A quantum operation changes a quantum state represented by a qubit. The behavior of a quantum operation is adjusted by control parameter values. As one example, the quantum operation unit 21 irradiates a qubit with a microwave pulse signal whose waveform corresponds to the control parameter values.

The control unit 22 receives a command from the information processing apparatus 100. A calibration command includes the name of a control parameter and a control parameter value. The control unit 22 holds a control parameter value included in the command, and controls the quantum operation executed by the quantum operation unit 21. Examples of control parameters include a time width, an amplitude, and a phase of a microwave pulse signal. The control unit 22 also instructs the quantum operation unit 21 to perform a quantum operation in keeping with a quantum operation command. The control unit 22 also reads a measurement value generated by measurement of a qubit in keeping with a measurement value acquisition command, and transmits the measurement value to the information processing apparatus 100.

Quantum information processing typically includes quantum computation, quantum simulation, quantum communication, quantum cryptography, quantum sensing, and the like. Examples of physical platforms for quantum information processing include superconducting quantum circuits, semiconductor quantum dots, diamond NV centers, NMR molecules, neutral atoms, trapped ions, and light. A typical quantum information processing protocol based on quantum circuits uses three types of quantum operations: initialization; quantum gates; and measurement.

The quantum operation implemented in the quantum computer 20 has an error indicating a deviation from an ideal quantum operation. The information processing apparatus 100 evaluates and calibrates the quantum computer 20 in order to improve the accuracy of the quantum operation. The evaluation estimates the error of the quantum operation. The calibration changes control parameter values based on the error data to reduce the error. The information processing apparatus 100 may iteratively perform evaluation and calibration.

Next, the error of a quantum gate will be described. The action of a quantum gate on a quantum state is described by a unitary matrix. When a Hamiltonian describing time evolution of a target quantum system is expressed as H(t), a unitary matrix U indicating the action of a quantum gate realized by time evolution from time 0 to time t is defined as indicated in Equation (1). In Equation (1), T is a Dyson time order operator, and e is a matrix exponential function. $U = {Te}^{- \frac{i}{ℏ} {\int }_{0}^{t} dt ′ H \left(t′\right)} = {e}^{- iA}$

A unitary matrix is a matrix such that the product of a matrix and its adjoint matrix is a unit matrix. The adjoint matrix is a matrix obtained by transposing an original matrix and taking a complex conjugate. For a unitary matrix U, there is a Hermitian matrix A that satisfies the second equality of Equation (1). A Hermitian matrix is a matrix where the matrix and its adjoint are equal. In the second embodiment, the Hermitian matrix A may be referred to as the "generator" of a quantum gate. The generator corresponds to the matrix logarithm of a unitary matrix U representing the quantum gate.

The quantum circuit is a quantum computational model describing an execution procedure of a plurality of quantum gates. The quantum gates included in a quantum circuit are typically executed in order from left to right. A composite quantum gate representing the overall operation of a plurality of quantum gates executed in series is represented by the product of a plurality of unitary matrices corresponding to the plurality of quantum gates. Here, the unitary matrix of the quantum gate to be executed first is disposed on the right side, and unitary matrices of quantum gates to be executed later are disposed to the left. This means that the execution order is reversed between a quantum circuit and a matrix operation.

A quantum gate has an action of rotating a quantum state by a specific angle around a rotation axis specified by the Hermitian matrix A. When the matrix specifying the rotation axis is denoted by P and the rotational angle is denoted by 8, the quantum gate may be denoted by P_{θ}. When the matrix P is a Pauli matrix or a tensor product of two or more Pauli matrices, the quantum gate P_{θ} is expressed by Equation (2). ${P}_{θ} = {e}^{- i \frac{θ}{2} P} = cos \frac{θ}{2} I - i sin \frac{θ}{2} P$

As one example, an X90 gate (X_{π/2}) that rotates by 90 degrees around the X axis is expressed by Equation (3). The X90 gate is a one-input quantum gate that operates on one qubit. A ZX90 gate (ZX_{π/2}) that rotates by 90 degrees around the ZX axis is expressed by Equation (4). The ZX90 gate is a two-input quantum gate that operates on two qubits. ${X}_{\frac{π}{2}} = {e}^{- i \frac{π}{4} X} = cos \frac{π}{4} I - i sin \frac{π}{4} X$ ${ZX}_{\frac{π}{2}} = {e}^{- i \frac{π}{4} ZX} = cos \frac{π}{4} I - i sin \frac{π}{4} ZX$

A is an ideal value of the generator, and ε is a generator error indicating a deviation from the ideal value. ΔA is a difference in generator which is changeable by adjusting control parameters of the quantum gate itself. The unitary matrix U of the quantum gate implemented in the quantum computer 20 is expressed by Equation (5). In the second embodiment, the influence of a change in ΔA on the generator error ε is regarded as sufficiently small that ε and ΔA are independent of each other. $U = {e}^{- i \left(A+ϵ+ΔA\right)}$

In an ideal situation, it is possible to completely cancel out the generator error ε as in ΔA = -ε through adjustment of the control parameters of the quantum gate itself. However, depending on the quantum gate, the control parameter may affect only some angle components of the generator, and an error component that is not canceled may remain even when the control parameter values are changed. For this reason, when calibrating the target quantum gate, the information processing apparatus 100 attempts to reduce the generator error by adding a calibration quantum gate before and after the target quantum gate.

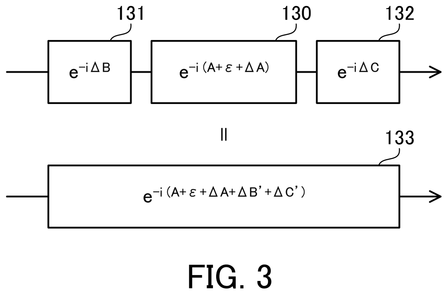

FIG. 3 depicts one example of a quantum circuit in which a calibration quantum gate has been added to a target quantum gate. A quantum gate 130 is a target quantum gate to be calibrated. A quantum gate 131 is a calibration quantum gate added before the quantum gate 130. A quantum gate 132 is a calibration quantum gate added to the latter stage of the quantum gate 130. A quantum gate 133 is a composite quantum gate in which all of the quantum gates 131, 132, and 133 are regarded as a single quantum gate.

A unitary matrix U' of the quantum gate 133 is expressed by Equation (6). By adding the quantum gates 131 and 132 to the quantum gate 130, the unitary matrix U in Equation (5) is changed to the unitary matrix U' in Equation (6). In FIG. 3 and Equation (6), ΔB is the generator of the quantum gate 131 and ΔC is the generator of the quantum gate 132. $U ′ = {e}^{- i Δ C} {e}^{- i \left(A+ϵ+ΔA\right)} {e}^{- i Δ B} = {e}^{- i \left(A+ϵ+ΔA+ΔB′+ΔC′\right)}$

Here, due to the non-commutativity of the generator, the generator of the quantum gate 133 does not match A + ε + ΔA + ΔB + ΔC and instead is A + ε + ΔA + ΔB' + ΔC'. In general, the product of the matrix index of the matrix A and the matrix index of the matrix B exhibits the non-commutativity indicated in Equation (7). This means that the generator ΔB of the quantum gate 131 changes to ΔB' through synthesis, and the generator ΔC of the quantum gate 132 changes to ΔC' through synthesis. The unitary matrix U' of the quantum gate 133 is also expressed by Equation (8). Δ' indicates the influence of the quantum gates 131 and 132 on the generator of the quantum gate 130, and strictly speaking depends on A, ε, ΔA, ΔB, and ΔC. ${e}^{A} {e}^{B} \neq {e}^{A + B}$ $U ′ = {e}^{- i \left(A+ϵ′\right)} where ϵ ′ = ϵ + Δ A + Δ ′ \left(A,ϵ,ΔA,ΔB,ΔC\right)$

The information processing apparatus 100 preferably selects ΔA, ΔB, and ΔC so that ε' in Equation (8) becomes zero, and preferably selects ΔA, ΔB, and ΔC that satisfy ΔA + ΔB' + ΔC' = -ε. However, Δ' is nonlinear with respect to A, ε, ΔA, ΔB, and ΔC, and it is not easy to obtain precise solutions of ΔA, ΔB, and ΔC. The information processing apparatus 100 therefore introduces an approximation function that expresses Δ' by linear approximation with respect to ε.

There is a Baker-Campbell-Hausdorff (BCH) formula for approximation of the product of matrix exponents. Equation (9) represents the BCH formula. However, the BCH formula has a precondition that the sum of the norm of the matrix A (e.g., the Frobenius norm) and the norm of the matrix B is less than ln2, where ln is the natural logarithm. On the other hand, the generators of many quantum gates do not satisfy this precondition. It is therefore difficult to accurately approximate synthesis of quantum gates by the BCH formula. ${e}^{A} {e}^{B} = {e}^{A + B + \frac{AB - BA}{2} + ⋯} if \left‖A\right‖ + \left‖B\right‖ < ln 2$

First, the information processing apparatus 100 performs eigenvalue decomposition on the matrix A that relates to the target quantum gate, as indicated by Equation (10). In Equation (10), aⱼ is the j^{th} (where j = 1, 2, ...) eigenvalue, and Pⱼ is the j^{th} projection matrix. The information processing apparatus 100 calculates a coefficient lⱼₖ indicated in Equation (11) for each pair aⱼ and aₖ of eigenvalues in the matrix A. $A = {⊕}_{j} {a}_{j} {P}_{j}$ ${l}_{jk} = \left\{\begin{matrix}1 & \left(j=k\right) \\ \frac{{e}^{{a}_{j} - {a}_{k}} - 1}{{a}_{j} - {a}_{k}} & \left(j\neq k\right)\end{matrix}\right.$

The information processing apparatus 100 then defines a function cml_{A} indicated in Equation (12) and a function cmr_{A} indicated in Equation (13) using the projection matrices Pⱼ and Pₖ and the coefficient lⱼₖ. The functions cml_{A} and cmr_{A} are linear functions with respect to the matrix A. ${cml}_{A} \left(B\right) = {\sum }_{j , k} \frac{1}{{l}_{jk}} {P}_{j} {BP}_{k}$ ${cmr}_{A} \left(B\right) = {\sum }_{j , k} \frac{1}{{l}_{kj}} {P}_{j} {BP}_{k}$

The product e^{B} × e^{A} of the matrix index e^{B} of the matrix B and the matrix index e^{A} of the matrix A is expressed by Equation (14) using the function cml_{A}(B). In Equation (14), ∥B∥ ² is a high-order term of the second or higher order with respect to the matrix B. Accordingly, the product e^{B} × e^{A} is approximated to the matrix exponent of A + cml_{A}(B) within a first order approximation. The product e^{A} × e^{B} is expressed by Equation (15) using the function cmr_{A}(B). Accordingly, the product e^{A} × e^{B} is approximated to the matrix exponent of A + cmr_{A}(B) within a first order approximation. ${e}^{B} {e}^{A} = {e}^{A + {cml}_{A} \left(B\right) + O \left({\left‖B\right‖}^{2}\right)}$ ${e}^{A} {e}^{B} = {e}^{A + {cmr}_{A} \left(B\right) + O \left({\left‖B\right‖}^{2}\right)}$

The information processing apparatus 100 linearly approximates the unitary matrix U' of the quantum gate 133 using the functions cml_{-iA} and cmr_{-iA} as in Equation (16). ΔB' = cmr_{-iA}(ΔB) and ΔC' = cml_{-iA}(ΔC). For this reason, the information processing apparatus 100 selects ΔA, ΔB, and ΔC that cancel out the generator error ε so as to satisfy Equation (17) . $U ′ \approx {e}^{- i \left(A+ϵ+ΔA+{cmr}_{- iA}\left(ΔB\right)+{cml}_{- iA}\left(ΔC\right)\right)}$ $Δ A + {cmr}_{- iA} \left(ΔB\right) + {cml}_{- iA} \left(ΔC\right) = - ϵ$

The information processing apparatus 100 does not need to adjust the control parameter of the target quantum gate. In that case, ΔA = O. The information processing apparatus 100 may also dispose a calibration quantum gate only one of before and after the target quantum gate. When a calibration quantum gate is not disposed before the target quantum gate, ΔB = O. When a calibration quantum gate is not disposed after the target quantum gate, ΔC = O.

The calibration quantum gate disposed before the target quantum gate may be expanded into two or more quantum gates. The order in which two or more expanded quantum gates are disposed is usually interchangeable because it does not affect the first order approximation. In the same way, the calibration quantum gate disposed after the target quantum gate may be expanded into two or more quantum gates. The order in which two or more expanded quantum gates are disposed is usually interchangeable because it does not affect the first order approximation.

The information processing apparatus 100 selects ΔA, ΔB, and ΔC as follows. A set of generators that are usable as ΔA is denoted by {ΔA_{α}}, a set of generators that are usable as ΔB is denoted by {ΔB_{α}}, and a set of generators that are usable as ΔC is denoted by {ΔC_{α}}. The plurality of ΔA_{α} correspond to a plurality of control parameters of the target quantum gate, for example. The plurality of ΔB_{α} correspond to a plurality of rotation gates such as an X-axis rotation gate, a Y-axis rotation gate, and a Z-axis rotation gate. In the same way, the plurality of ΔC_{α} correspond to a plurality of rotation gates.

ΔA, ΔB, and ΔC are each decomposed into a linear sum of the available generators, as indicated in Equation (18). The coefficient parameter ν_{α} that acts on ΔA_{α} corresponds to the adjustment amount of the rotational angle by the target quantum gate itself. The coefficient parameter ν_{α} that acts on ΔB_{α} corresponds to the rotational angle of a preceding calibration quantum gate. The coefficient parameter ν_{α} that acts on ΔC_{α} corresponds to the rotational angle of a subsequent calibration quantum gate. Note that the coefficient parameter ν_{α} commonly acts on all of ΔA_{α}, ΔB_{α}, and ΔC_{α} so as to be able to handle common rotational angles that act on two or more of ΔA, ΔB, and ΔC, as in the case where a preceding calibration quantum gate and the succeeding calibration quantum gate cooperate together. $Δ A = {\sum }_{α} {ν}_{α} Δ {A}_{α} , Δ B = {\sum }_{α} {ν}_{α} Δ {B}_{α} , Δ C = {\sum }_{α} {ν}_{α} Δ {C}_{α}$

Substituting Equation (18) into Equation (17) and rearranging produces Equation (19). Equation (19) is a linear equation in which the coefficient parameter ν_{α} is a variable. The information processing apparatus 100 solves this linear equation for the coefficient parameter ν_{α}. As one example, the information processing apparatus 100 solves the linear equation in Equation (19) by the following method. ${\sum }_{α} \left(Δ{A}_{α}+{cmr}_{- iA}\left(Δ{B}_{α}\right)+{cml}_{- iA}\left(Δ{C}_{α}\right)\right) {ν}_{α} = - ϵ$

A function for vectorizing a matrix is denoted by vec, and a vector in which coefficient parameters ν_{α} are listed is denoted by v. The information processing apparatus 100 generates a matrix A in which an element on row β and in column α is defined as in Equation (20). Equation (19) is expressed as Equation (21) using this matrix Λ, a vector v, and a generator error ε. When the matrix A is a square matrix and an invertible matrix, the information processing apparatus 100 will be capable of analytically solving a linear equation as indicated in Equation (22) using an inverse matrix of the matrix A. It is also possible for the information processing apparatus 100 to calculate an approximate solution of v in Equation (21) using an iterative linear solver. ${Λ}_{βα} = {\left[vec\left(Δ{A}_{α}\right)\right]}_{β} + {\left[{cmr}_{- iA}vec\left(Δ{B}_{α}\right)\right]}_{β} + {\left[{cml}_{- iA}vec\left(Δ{C}_{α}\right)\right]}_{β}$ $Λ ν = - vec \left(ϵ\right)$ $ν = - {Λ}^{- 1} vec \left(ϵ\right)$

In this way, the information processing apparatus 100 calculates the value of the coefficient parameter ν_{α}. From the value of the coefficient parameter ν_{α}, the information processing apparatus 100 determines a quantum gate to be used as a preceding calibration quantum gate and determines a quantum gate to be used as a succeeding calibration quantum gate. As one example, the information processing apparatus 100 determines not to use a quantum gate where the absolute value of the coefficient parameter ν_{α} is zero or less than a threshold.

The information processing apparatus 100 also determines an adjustment amount of the rotational angle by the target quantum gate from the value of the coefficient parameter ν_{α}, and determines control parameter values for realizing this adjustment amount. The information processing apparatus 100 also determines the rotational angle of the preceding calibration quantum gate from the value of the coefficient parameter ν_{α}, and determines control parameter values (as example, the time width and/or amplitude of a microwave pulse signal) for realizing that rotational angle. In the same way, the information processing apparatus 100 determines the rotational angle of the succeeding calibration quantum gate from the value of the coefficient parameter ν_{α} and determines the control parameter values.

Next, a calibration example of a one-input quantum gate and a calibration example of a two-input quantum gate will be described. In the following description, an X90 gate and an X180 gate that rotates by 180 degrees about the X-axis are given as examples of one-input quantum gates. A ZX90 gate is given as an example of a two-input quantum gate.

First, consider a quantum gate X_{θ} that rotates a quantum state represented by one qubit by a rotational angle θ around the X axis. To implement X_{θ}, the quantum computer 20 may generate a microwave pulse signal by a method called derivative removal by adiabatic gate (DRAG). DRAG inserts an original waveform signal into an in-phase channel (or "I channel") and inserts a differential signal of the I channel into a quadrature phase channel (or "Q channel"). DRAG suppresses leakage transition in which the energy of the qubit unintentionally transitions to the third energy level |f>.

DRAG is described in the following document: F. Motzoi, J. M. Gambetta, P. Rebentrost, and F. K. Wilhelm, "Simple Pulses for Elimination of Leakage in Weakly Nonlinear Qubits", Physics Review Letters, Volume 103, Issue 11, September 2009.

However, DRAG may generate a generator error of the Z component as a side effect. Here, consider a case where the generator error of the Z component caused by DRAG and a generator error of the Y component derived from higher-order terms of a Magnus expansion cancel out.

A function cmr_{-iθ/2X} corresponding to the quantum gate X_{θ} is calculated as indicated in Equation (23). A function cml_{-iθ/2X} corresponding to the quantum gate X_{θ} is calculated as indicated in Equation (24). When 0 < θ < π, that is, when the rotational angle θ is larger than 0 degrees and smaller than 180 degrees, both the generator error of the Y component and the generator error of the Z component are canceled by disposing a single Z-axis rotation gate before and after X_{θ}. ${cmr}_{- i \frac{θ}{2} X} = \left[\begin{matrix}1 & 0 & 0 & 0 \\ 0 & 1 & 0 & 0 \\ 0 & 0 & \frac{θ sin θ}{2 \left(1-cos θ\right)} & - \frac{θ}{2} \\ 0 & 0 & \frac{θ}{2} & \frac{θ sin θ}{2 \left(1-cos θ\right)}\end{matrix}\right]$ ${cml}_{- i \frac{θ}{2} X} = \left[\begin{matrix}1 & 0 & 0 & 0 \\ 0 & 1 & 0 & 0 \\ 0 & 0 & \frac{θ sin θ}{2 \left(1-cos θ\right)} & \frac{θ}{2} \\ 0 & 0 & - \frac{θ}{2} & \frac{θ sin θ}{2 \left(1-cos θ\right)}\end{matrix}\right]$

In this case, ΔA, ΔB, and ΔC are defined as indicated in Equation (25). Adjustment using the control parameters of the quantum gate X_{θ} itself is not performed. The rotational angle of the preceding Z-axis rotation gate is expressed as θ_{Z} + θ_{Y} using an angle parameter θ_{Y} for canceling the Y component and an angle parameter θ_{Z} for canceling the Z component. The rotational angle of the succeeding Z-axis rotation gate is expressed as θ_{Z} - θ_{Y}. Regarding the angle parameter θ_{Y}, the preceding Z-axis rotation gate and the succeeding Z-axis rotation gate have symmetrical rotational angles. $Δ A = O , Δ B = \frac{{θ}_{Z} + {θ}_{Y}}{2} Z , Δ C = \frac{{θ}_{Z} - {θ}_{Y}}{2} Z$

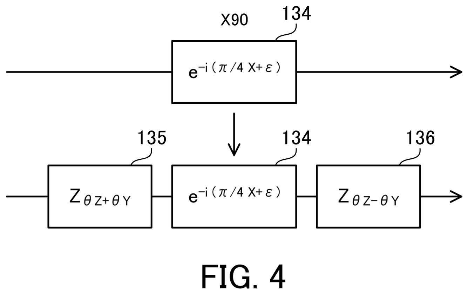

FIG. 4 depicts one example of addition of calibration quantum gates to an X90 gate. The quantum gate 134 is an X90 gate with a rotational angle θ of 90 degrees. A quantum gate 135 is added before the quantum gate 134, and a quantum gate 136 is added after the quantum gate 135. The quantum gate 135 is a Z-axis rotation gate as a calibration quantum gate. The rotational angle of the quantum gate 135 is θ_{Z} + θ_{Y}. The quantum gate 136 is a Z-axis rotation gate as a calibration quantum gate. The rotational angle of the quantum gate 136 is θ_{Z} - θ_{Y}.

However, by using a virtual Z gate to implement the quantum gate X_{θ}, it is also possible for the information processing apparatus 100 to cancel the Y component and the Z component of the generator error without increasing the number of quantum gates. Such virtual Z gate is capable of realizing, as a single quantum gate, an operation equivalent to a case where Z-axis rotation gates are added before and after a quantum gate X_{θ} by adjusting a microwave pulse signal for the quantum gate X_{θ}. The influence of the two Z-axis rotation gates on the generator is expressed by Equation (26) . ${cmr}_{- i \frac{θ}{2} X} \left(ΔB\right) + {cml}_{- i \frac{θ}{2} X} \left(ΔC\right) = \frac{{θ}_{Z} + {θ}_{Y}}{2} {cmr}_{- i \frac{θ}{2} X} \left(Z\right)$

Next, consider a case where θ = π, that is, a case where the target quantum gate is an X180 gate. A function cmr_{-i(π/2)X} corresponding to an X180 gate is calculated as indicated in Equation (27). A function cml_{-i(π/2)X} which also corresponds to an X180 gate is calculated as in Equation (28). ${cmr}_{- i \frac{π}{2} X} = \left[\begin{matrix}1 & 0 & 0 & 0 \\ 0 & 1 & 0 & 0 \\ 0 & 0 & 0 & - \frac{π}{2} \\ 0 & 0 & \frac{π}{2} & 0\end{matrix}\right]$ ${cml}_{- i \frac{π}{2} X} = \left[\begin{matrix}1 & 0 & 0 & 0 \\ 0 & 1 & 0 & 0 \\ 0 & 0 & 0 & \frac{π}{2} \\ 0 & 0 & - \frac{π}{2} & 0\end{matrix}\right]$

The generator error of an X180 gate is cancelled out by adding calibration quantum gates either before or after the X180 gate. In the following description, calibration quantum gates are added after the X180 gate. Here, a Z-axis rotation gate acts on the Y component of the generator error and a Y-axis rotation gate acts on the Z component of the generator error.

ΔA, ΔB, and ΔC are defined as indicated in Equation (29). Here, no adjustment is performed via the control parameters of the X180 gate itself. Also, no calibration quantum gates are added before the X180 gate. The succeeding calibration quantum gates include a Y-axis rotation gate and a Z-axis rotation gate. The rotational angle of the Y-axis rotation gate is θ_{Z} for canceling out the Z component. The rotational angle of the Z-axis rotation gate is θ_{Y} for canceling out the Y component. $Δ A = O , Δ B = O , Δ C = \frac{{θ}_{Z}}{2} Y + \frac{{θ}_{Y}}{2} Z$

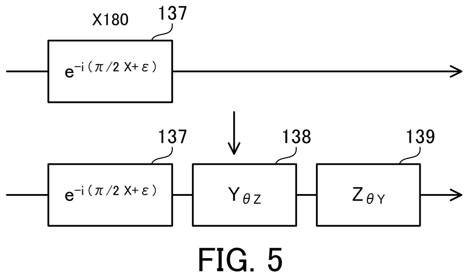

FIG. 5 depicts one example of addition of calibration quantum gates to an X180 gate. The quantum gate 137 is an X180 gate. A quantum gate 138 is added after the quantum gate 137, and a quantum gate 139 is further added after the quantum gate 138. However, the order of the quantum gate 138 and the quantum gate 139 may be reversed. The quantum gates 138 and 139 are calibration quantum gates. The quantum gate 138 is a Y-axis rotation gate with a rotational angle of θ_{Z}. The quantum gate 139 is a Z-axis rotation gate with a rotational angle of θ_{Y}.

Here, a numerical example of calibration of the X90 gate will be described. Pauli matrices I, X, Y, and Z of a one-qubit system are defined as indicated in Equation (30). When a calibration quantum gate for the generator ΔB is added before the X90 gate and a calibration quantum gate for the generator ΔC is added after the X90 gate, the unitary matrix U' of the composite quantum gate is approximated as indicated in Equation (31). $I = \left[\begin{matrix}1 & 0 \\ 0 & 1\end{matrix}\right] , X = \left[\begin{matrix}0 & 1 \\ 1 & 0\end{matrix}\right] , Y = \left[\begin{matrix}0 & - i \\ i & 0\end{matrix}\right] , Z = \left[\begin{matrix}1 & 0 \\ 0 & - 1\end{matrix}\right]$ $U ′ \approx {e}^{- i \left(\frac{π}{4}X+ϵ+{cmr}_{- i \frac{π}{4} X}\left(ΔB\right)+{cml}_{- i \frac{π}{4} X}\left(ΔC\right)\right)}$

It is assumed that ΔB and ΔC are defined as indicated in Equation (32). The preceding calibration quantum gate is a Z-axis rotation gate with a rotational angle θ_{Z} - θ_{Y}. The succeeding calibration quantum gate is a Z-axis rotation gate with a rotational angle θ_{Z} + θ_{Y}. In Equation (32), for ease of explanation, the sign of the angle parameter θ_{Y} is the opposite of the sign in FIG. 4 and Equation (25). $Δ B = \frac{{θ}_{Z} - {θ}_{Y}}{2} Z , Δ C = \frac{{θ}_{Z} + {θ}_{Y}}{2} Z$

The influence of the generators ΔB and ΔC of the two Z-axis rotation gates on the generator of the X90 gate is calculated as the first equality in Equation (33). The generator error ε is therefore canceled by θ_{Y} and θ_{Z} that satisfy the second equality in Equation (33). When a Y component included in the generator error ε is ε_{Y} and a Z component included in the generator error ε is ε_{Z}, θ_{Y} and θ_{Z} are calculated as indicated in Equation (34). In the case of ε_{Y} = π/2 × 0.01 and ε_{Z} = -π/2 × 0.02, θ_{Y} = -0.02 and θ_{Z} = 0.04 as indicated in Equation (35). ${cmr}_{- i \frac{π}{4} X} \left(ΔB\right) + {cml}_{- i \frac{π}{4} X} \left(ΔC\right) = \frac{π}{4} \left({θ}_{Y}Y+{θ}_{Z}Z\right) = - ϵ$ ${θ}_{Y} = - \frac{4}{π} {ϵ}_{Y} , {θ}_{Z} = - \frac{4}{π} {ϵ}_{Z} where ϵ = {ϵ}_{Y} Y + {ϵ}_{Z} Z$ ${ϵ}_{Y} = \frac{π}{2} \times 0.01 , {ϵ}_{Z} = - \frac{π}{2} \times 0.02 ⇒ {θ}_{Y} = - 0.02 , {θ}_{Z} = 0.04$

Next, the approximation accuracy of synthesis of a target quantum gate and calibration quantum gates will be described. Here, consider a case where a Z-axis rotation gate with a rotational angle of θ is added after a target quantum gate with the generator H₀. As indicated in Equation (36), the generator of the composite quantum gate is H₀ + Δ(θ). Δ(θ) indicates the influence of the calibration quantum gate and depends on the rotational angle θ. ${e}^{- i \frac{θ}{2} Z} {e}^{- {iH}_{0}} = {e}^{- i \left({H}_{0}+Δ\left(θ\right)\right)}$

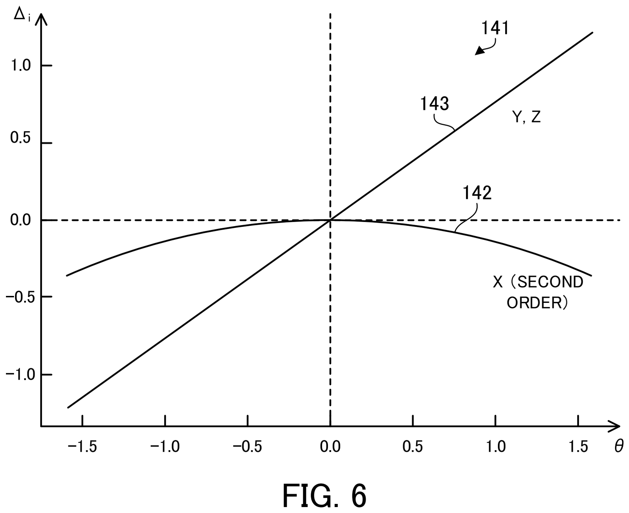

FIG. 6 is a graph depicting example calibration of an X90 gate by first order approximation. The graph 141 depicts the relationship between θ and Δ(θ) when the target quantum gate is an X90 gate. A curve 142 indicates the X component included in Δ(θ) up to the second order term. A straight line 143 indicates the Y component and the Z component included in Δ(θ). In the case of a X90 gate, the first order approximation of the Y component matches the exact value, and the first order approximation of the Z component matches the exact value.

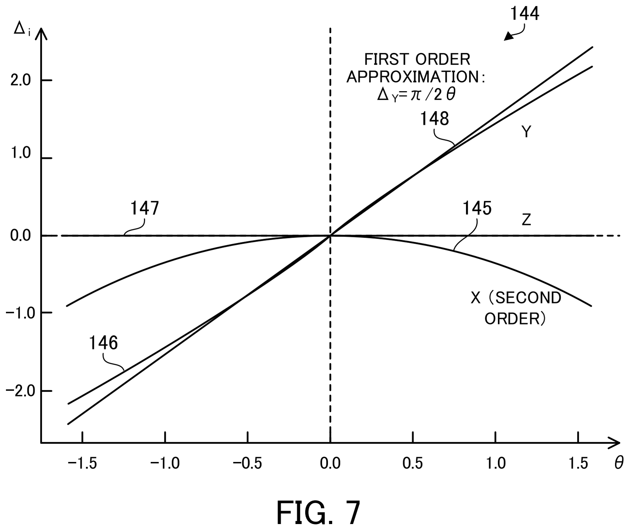

FIG. 7 is a graph depicting example calibration of an X180 gate by first order approximation. The graph 144 depicts the relationship between θ and Δ(θ) when the target quantum gate is an X180 gate. A curve 145 indicates the X component included in Δ(θ) up to the second order term. A curve 146 indicates the exact value of the Y component included in Δ(θ). A straight line 147 indicates the Z component included in Δ(θ). A straight line 148 indicates an analytical solution corresponding to a first-order approximation of the Y component included in Δ(θ).

In the case of an X180 gate, the first order approximation of the Z component matches the exact value. On the other hand, the first-order approximation of the Y component does not match the exact value. However, in a region where θ is close to 0, the straight line 148 approximates the curve 146 with high accuracy, so that the Y component is approximated with sufficient accuracy for practical use.

The calibration of a ZX90 gate implemented by cross resonance (CR) will now be described. The calibration quantum gate described below is merely one example, and the information processing apparatus 100 may use other types of quantum gates as the calibration quantum gate. The combination of quantum gates to be used may be determined through optimization by the information processing apparatus 100 or may be designated by the user of the information processing apparatus 100.

The generator error of a two-input quantum gate is expanded into 15 error components excluding the II component. It is preferable for these 15 error components to be as independently calibratable as possible. It is also preferable for each error component to be calibrated by a one-input quantum gate whenever possible. The 15 error components are classified into five categories in terms of whether a ZX90 gate itself is calibratable, whether there is non-commutativity with the ideal value A of the generator, and the number of qubits acted upon.

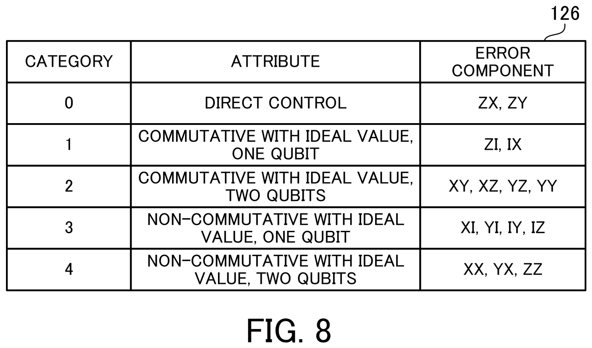

FIG. 8 depicts example classifications of error components of a ZX90 gate. A table 126 indicates the classification of generator errors for a ZX90 gate. Category 0 indicates error components for which direct calibration by the control parameters of the ZX90 gate is possible. Category 0 includes ZX and ZY components. Category 1 indicates error components that are commutative with the ideal value A of the generator and act on one qubit. Category 1 includes ZI and IX components.

Category 2 indicates error components that are commutative with the ideal value A of the generator and act on two qubits. Category 2 includes an XY component, an XZ component, a YZ component, and a YY component. Category 3 indicates error components that are non-commutative with the ideal value A of the generator and act on one qubit. Category 3 includes XI, YI, IY and IZ components. Category 4 indicates error components that are non-commutative with the ideal value A of the generator and act on two qubits. Category 4 includes an XX component, a YX component, and a ZZ component.

Error components belonging to category 0 are calibrated through adjustment of the control parameters of the ZX90 gate. Error components belonging to category 1 or category 2 are calibrated by calibration quantum gates disposed either before or after the ZX90 gate. However, the calibration quantum gates for category 2 error components that act on two qubits are implemented by combining a ZX or ZY gate with a one-input quantum gate.

It is not easy to calibrate error components belonging to category 3 or category 4 with calibration quantum gates disposed before or after the ZX90 gate alone. This is because a secondary error component is generated due to the non-commutativity. For this reason, the information processing apparatus 100 disposes the same type of calibration quantum gate with rotational angles of opposite signs before and after the ZX90 gate. However, it is also possible to implement calibration quantum gates for category 3 or category 4 error components using one-input quantum gates. This means that no two-input quantum gate may be used for the error components of categories 1, 3, and 4.

An example structure of a calibration quantum gate will now be described. Here, it is assumed that a ZX gate and a ZY gate may be used as two-input quantum gates, and an X-axis rotation gate, a Y-axis rotation gate, and a Z-axis rotation gate may be used as one-input quantum gates. The angle parameter θ and the coefficient parameter v have a relationship whereby θ = 2v.

ΔA is defined as indicated in Equation (37) using matrices ZX and ZY and coefficient parameters ν_{ZX} and ν_{ZY}. ΔB is defined as indicated in Equation (38) using matrices IY, IZ, XI, and YI and coefficient parameters ν_{IY}, ν_{ZZ}, ν_{IZ}, ν_{XI}, ν_{YX}, ν_{YI}, and ν_{XX}. ΔC is defined as indicated in Equation (39) using matrices IX, ZI, IY, IZ, XI, YI, XY, XZ, YY, and YZ and coefficient parameters ν_{IX}, ν_{ZI}, ν_{IY}, ν_{ZZ}, ν_{IZ}, ν_{XI}, ν_{YX}, ν_{YI}, ν_{XX}, ν_{XY}, ν_{XZ}, ν_{YY}, and ν_{YZ}. $Δ A = {ν}_{ZX} ZX + {ν}_{ZY} ZY$ $\begin{matrix}Δ B = \left({ν}_{IY}+{ν}_{ZZ}\right) IY + {ν}_{IZ} IZ \\ + \left({ν}_{XI}+{ν}_{YX}\right) XI + \left({ν}_{YI}-{ν}_{XX}\right) YI\end{matrix}$ $\begin{matrix}Δ C = {ν}_{IX} IX + {ν}_{ZI} ZI + \left({ν}_{IY}-{ν}_{ZZ}\right) IY + {ν}_{IZ} IZ + \left({v}_{XI}-{ν}_{YX}\right) XI \\ + \left({ν}_{YI}+{ν}_{XX}\right) YI + {ν}_{XX} XY + {ν}_{XZ} XZ + {ν}_{YY} YY + {ν}_{YZ} YZ\end{matrix}$

It is assumed that a normalized Pauli matrix base of a two-qubit system is selected as a representation base of a vectorization function vec. In addition, as indicated in Equation (40), a vector λ is assumed to be a vector in which diagonal components of the matrix 1/2A are arranged. λ is calculated as indicated below. $\frac{1}{2} Λ = diag \left(λ\right)$

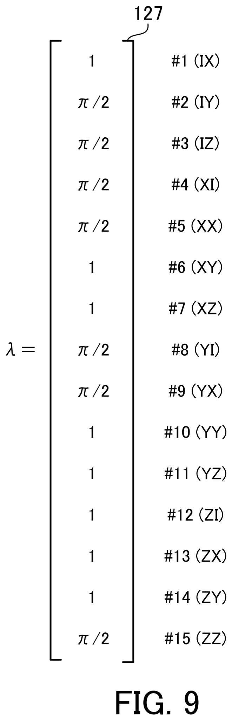

FIG. 9 depicts one example of a transform coefficient vector with consideration to non-commutativity. A vector 127 indicates the vector λ. The first dimension of the vector 127 is "1" and corresponds to the IX component of category 1. The second dimension of the vector 127 is "π/2" and corresponds to the IY component of category 3. The third dimension of the vector 127 is "π/2" and corresponds to the IZ component of category 3. The fourth dimension of the vector 127 is "π/2" and corresponds to the XI component of category 3.

The fifth dimension of the vector 127 is "π/2" and corresponds to the XX component of category 4. The sixth dimension of the vector 127 is "1" and corresponds to the XY component of category 2. The seventh dimension of the vector 127 is "1" and corresponds to the XZ component of category 2. The eighth dimension of the vector 127 is "π/2" and corresponds to the YI component of category 3. The ninth dimension of the vector 127 is "π/2" and corresponds to the YX component of category 4.

The tenth dimension of the vector 127 is "1" and corresponds to the YY component of category 2. The 11th dimension of the vector 127 is "1" and corresponds to the YZ component of category 2. The 12th dimension of the vector 127 is "1" and corresponds to the ZI component of category 1. The 13th dimension of the vector 127 is "1" and corresponds to the ZX component of category 0. The 14th dimension of the vector 127 is "1" and corresponds to the ZY component of category 0. The 15th dimension of the vector 127 is "n/2" and corresponds to the ZZ component of category 4.

This means that out of the elements of the vector λ, the elements corresponding to the error components of categories 0, 1, and 2 are "1" and the elements corresponding to the error components of categories 3 and 4 are "π/2". Since the generators for the error components of the categories 0, 1, and 2 are synthesized as they are, the transform coefficient is "1". On the other hand, since the generators for the error components of categories 3 and 4 are affected by non-commutativity, the transform coefficient is "π/2".

The generator error ε is expanded as indicated in Equation (41) using the Pauli matrix P_{α} and the rotational angle θ_{ε,α} corresponding to the Pauli matrix P_{α}. α represents 15 rotational axes. Since the matrix A is diagonalized, the angle parameter θ_{α} of the calibration quantum gate for reducing the error component of the rotation axis α is calculated as indicated in Equation (42). This demonstrates that the 15 error components forming the generator error are calibratable independently of one another. $ϵ = \frac{1}{2} {\sum }_{α} {θ}_{ϵ , α} {P}_{α}$ ${θ}_{α} = - \frac{1}{{λ}_{α}} vec {\left(ϵ\right)}_{α} = - \frac{{θ}_{ϵ , α}}{{λ}_{α}}$

This means that the information processing apparatus 100 reduces the cost of error evaluation and improves the efficiency of calibration. In addition, the information processing apparatus 100 may employ a sweep method in which evaluation of the generator error and calibration are repeated while gradually narrowing the range of the rotational angles of calibration quantum gates. The independence of the error components provides favorable compatibility with this sweep method and is advantageous in practical use.

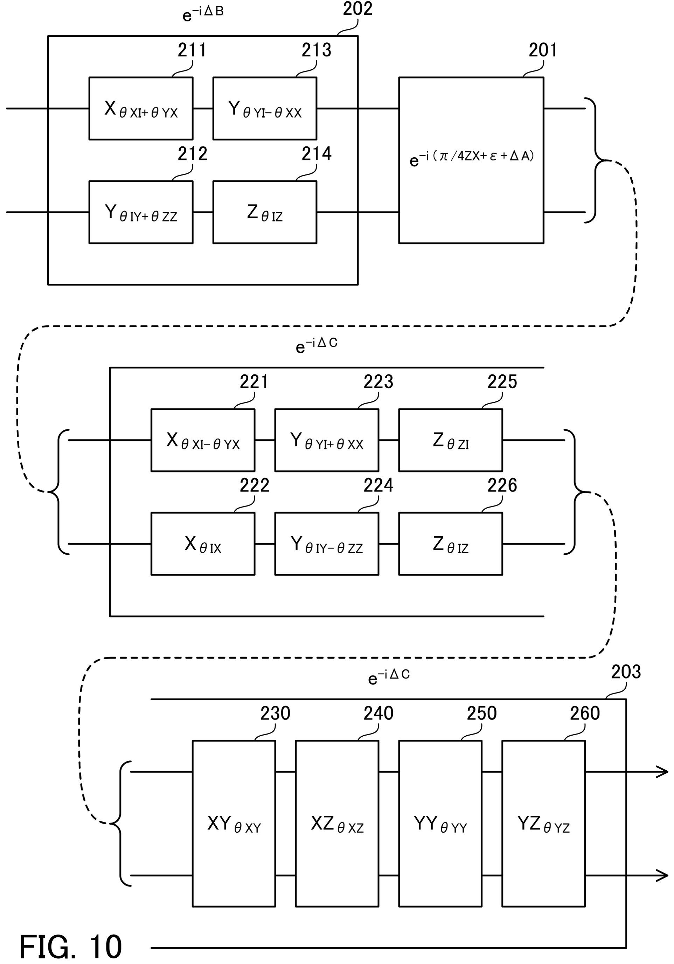

FIG. 10 depicts one example of addition of calibration quantum gates to a ZX90 gate. A quantum gate 201 is a ZX90 gate. The quantum gate 201 has a generator n/4ZX + ε + ΔA. A quantum gate 202 is added before the quantum gate 201, and a quantum gate 203 is added after the quantum gate 201. The quantum gate 202 is a calibration quantum gate with a generator ΔB. The quantum gate 203 is a calibration quantum gate with a generator ΔC.

The quantum gate 202 is expanded into quantum gates 211, 212, 213, and 214. The quantum gate 211 is an X-axis rotation gate that acts on a first qubit and has a rotational angle θ_{XI} + θ_{YX}. The quantum gate 212 is a Y-axis rotation gate that acts on a second qubit and has a rotational angle θ_{IY} + θ_{ZZ}. The quantum gate 213 is a Y-axis rotation gate that follows the quantum gate 211 and has a rotational angle θ_{YI} - θ_{XX}. The quantum gate 214 is a Z-axis rotation gate that follows the quantum gate 212 and has a rotational angle θ_{IZ}.

The quantum gate 203 is expanded into quantum gates 221, 222, 223, 224, 225, 226, 230, 240, 250, and 260. The quantum gate 221 is an X-axis rotation gate that acts on a first qubit and has a rotational angle θ_{XI} - θ_{YX}. The quantum gate 211 and the quantum gate 221 form a pair and have symmetrical angle parameters. The quantum gate 222 is an X-axis rotation gate that acts on a second qubit and has a rotational angle θ_{IX}.

The quantum gate 223 is a Y-axis rotation gate that follows the quantum gate 221 and has a rotational angle θ_{YI} + θ_{XX}. The quantum gate 213 and the quantum gate 223 form a pair and have symmetrical angle parameters. The quantum gate 224 is a Y-axis rotation gate that follows the quantum gate 222 and has a rotational angle θ_{IY} - θ_{ZZ}. The quantum gate 212 and the quantum gate 224 form a pair and have symmetrical angle parameters. The quantum gate 225 is a Z-axis rotation gate that follows the quantum gate 223 and has a rotational angle θ_{ZI}. The quantum gate 226 is a Z-axis rotation gate that follows the quantum gate 224 and has a rotational angle θ_{IZ}. The quantum gates 214 and 226 form a pair.

The quantum gate 230 is a two-input quantum gate that follows the quantum gates 225 and 226. The quantum gate 230 is an XY gate with a rotational angle θ_{XY}. The quantum gate 240 is an XZ gate that is disposed after the quantum gate 230 and has a rotational angle θ_{XZ}. The quantum gate 250 is disposed after the quantum gate 240 and is a YY gate with a rotational angle θ_{YY}. The quantum gate 260 is located after the quantum gate 250 and is a YZ gate with a rotational angle θ_{YZ}.

Note that changing the order of the quantum gates affects only the second and higher order terms with respect to the generator error ε and does not affect the first order approximation. For this reason, the order of the quantum gate 211 and the quantum gate 213 may be reversed. The order of the quantum gate 212 and the quantum gate 214 may also be reversed. The order of the quantum gates 221, 223, and 225 may be changed. The order of the quantum gates 222, 224, and 226 may also be changed. The order of the quantum gates 230, 240, 250, and 260 may be changed.

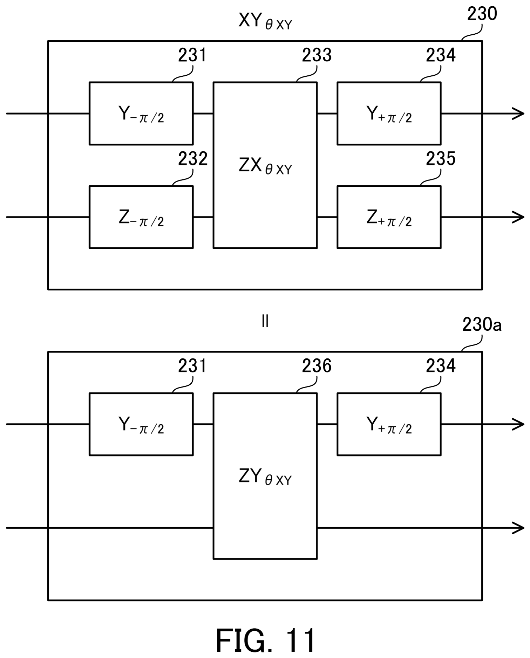

FIG. 11 depicts an example expansion of a first calibration quantum gate. The quantum gate 230 is expanded into quantum gates 231, 232, 233, 234, and 235. The quantum gate 231 is a Y-axis rotation gate that acts on the first qubit and has a rotational angle θ_{-π/2}. The quantum gate 232 is a Z-axis rotation gate that acts on the second qubit and has a rotational angle θ_{-π/2}.

The quantum gate 233 is a two-input quantum gate that follows the quantum gates 231 and 232. The quantum gate 233 is a ZX gate with a rotational angle θ_{XY}. The quantum gate 234 is a one-input quantum gate that follows the quantum gate 233. The quantum gate 234 is a Y-axis rotation gate that acts on the first qubit and has a rotational angle θ_{+π/2}. The quantum gate 235 is a one-input quantum gate that follows the quantum gate 233. The quantum gate 235 is a Z-axis rotation gate that acts on the second qubit and has a rotational angle θ_{+π/2}.

The quantum gate 230 is equivalent to the quantum gate 230a. The information processing apparatus 100 may use the quantum gate 230a instead of the quantum gate 230. The quantum gate 230a is expanded into quantum gates 231, 234, and 236. The quantum gate 236 is a two-input quantum gate that follows the quantum gate 231. The quantum gate 236 is a ZY gate with a rotational angle θ_{XY}. The quantum gate 234 is positioned after the quantum gate 236.

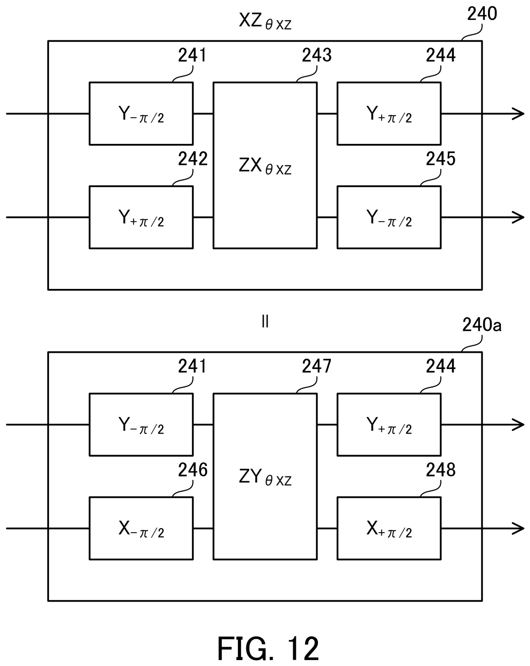

FIG. 12 depicts an example expansion of a second calibration quantum gate. The quantum gate 240 is expanded into quantum gates 241, 242, 243, 244, and 245. The quantum gate 241 is a Y-axis rotation gate that acts on the first qubit and has a rotational angle θ_{-π/2}. The quantum gate 242 is a Y-axis rotation gate that acts on the second qubit and has a rotational angle θ_{+π/2}.

The quantum gate 243 is a two-input quantum gate that follows the quantum gates 241 and 242. The quantum gate 243 is a ZX gate with a rotational angle θ_{XZ}. The quantum gate 244 is a one-input quantum gate that follows the quantum gate 243. The quantum gate 244 is a Y-axis rotation gate that acts on the first qubit and has a rotational angle θ_{+π/2}. The quantum gate 245 is a one-input quantum gate that follows the quantum gate 243. The quantum gate 245 is a Y-axis rotation gate that acts on the second qubit and has a rotational angle θ_{-π/2}.

The quantum gate 240 is equivalent to the quantum gate 240a. The information processing apparatus 100 may use the quantum gate 240a instead of the quantum gate 240. The quantum gate 240a is expanded into quantum gates 241, 244, 246, 247, and 248. The quantum gate 246 is an X-axis rotation gate that acts on the second qubit and has a rotational angle θ_{-π/2}.

The quantum gate 247 is a two-input quantum gate that follows the quantum gates 241 and 246. The quantum gate 247 is a ZY gate with a rotational angle θ_{XZ}. The quantum gate 244 is positioned after the quantum gate 247. The quantum gate 248 is a one-input quantum gate that follows the quantum gate 247. The quantum gate 248 is an X-axis rotation gate that acts on the second qubit and has a rotational angle θ_{+π/2}.

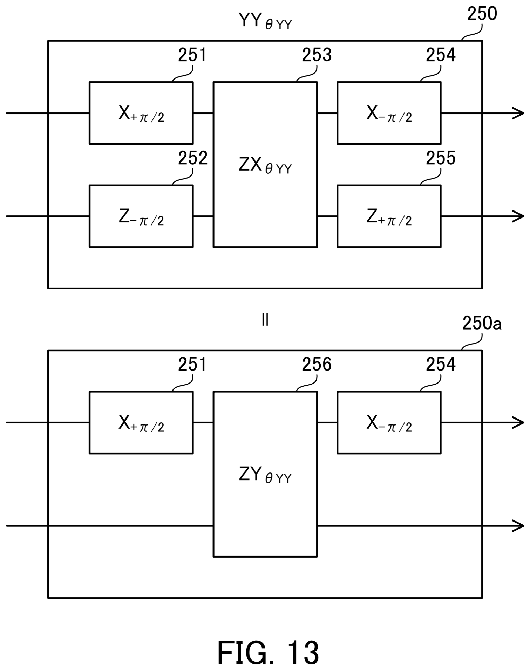

FIG. 13 depicts an example expansion of a third calibration quantum gate. The quantum gate 250 is expanded into quantum gates 251, 252, 253, 254, and 255. The quantum gate 251 is an X-axis rotation gate that acts on a first qubit and has a rotational angle θ_{+π/2}. The quantum gate 252 is a Z-axis rotation gate that acts on a second qubit and has a rotational angle θ_{-π/2}.

The quantum gate 253 is a two-input quantum gate that follows the quantum gates 251 and 252. The quantum gate 253 is a ZX gate with a rotational angle θ_{YY}. The quantum gate 254 is a one-input quantum gate that follows the quantum gate 253. The quantum gate 254 is an X-axis rotation gate that acts on the first qubit and has a rotational angle θ_{-π/2}. The quantum gate 255 is a one-input quantum gate that follows the quantum gate 253. The quantum gate 255 is a Z-axis rotation gate that acts on the second qubit and has a rotational angle θ_{+π/2}.

The quantum gate 250 is equivalent to the quantum gate 250a. The information processing apparatus 100 may use the quantum gate 250a instead of the quantum gate 250. The quantum gate 250a is expanded into quantum gates 251, 254, and 256. The quantum gate 256 is a two-input quantum gate that follows the quantum gate 251. The quantum gate 256 is a ZY gate with a rotational angle θ_{YY}. The quantum gate 254 is positioned after the quantum gate 256.

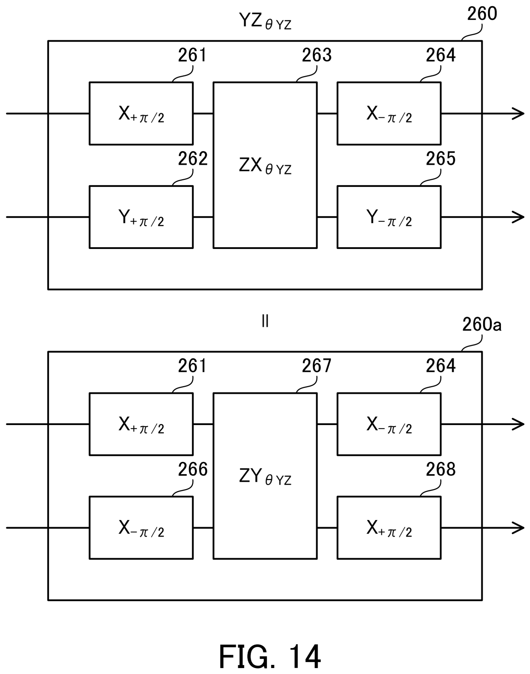

FIG. 14 depicts an example expansion of the fourth calibration quantum gate. The quantum gate 260 is expanded into quantum gates 261, 262, 263, 264, and 265. The quantum gate 261 is an X-axis rotation gate that acts on a first qubit and has a rotational angle θ_{+π/2}. The quantum gate 262 is a Y-axis rotation gate that acts on a second qubit and has a rotational angle θ_{+π/2}.

The quantum gate 263 is a two-input quantum gate that follows the quantum gates 261 and 262. The quantum gate 263 is a ZX gate with a rotational angle θ_{YZ}. The quantum gate 264 is a one-input quantum gate that follows the quantum gate 263. The quantum gate 264 is an X-axis rotation gate that acts on the first qubit and has a rotational angle θ_{-π/2}. The quantum gate 265 is a one-input quantum gate that follows the quantum gate 263. The quantum gate 265 is a Y-axis rotation gate that acts on the second qubit and has a rotational angle θ_{-π/2}.

The quantum gate 260 is equivalent to the quantum gate 260a. The information processing apparatus 100 may use the quantum gate 260a instead of the quantum gate 260. The quantum gate 260a is expanded into quantum gates 261, 264, 266, 267, and 268. The quantum gate 266 is an X-axis rotation gate that acts on the second qubit and has a rotational angle θ_{-π/2}.

The quantum gate 267 is a two-input quantum gate that follows the quantum gates 261 and 266. The quantum gate 267 is a ZY gate with a rotational angle θ_{YZ}. The quantum gate 264 is positioned after the quantum gate 267. The quantum gate 268 is a one-input quantum gate that follows the quantum gate 267. The quantum gate 268 is an X-axis rotation gate that acts on the second qubit and has a rotational angle θ_{+π/2}. Next, an example calibration result of a ZX90 gate will be described.

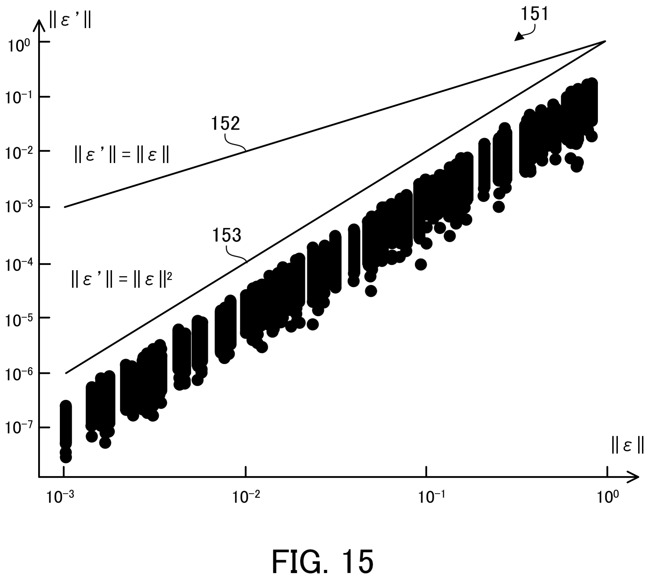

FIG. 15 is a graph depicting an example of a relationship between a pre-calibration error and a post-calibration error. A graph 151 illustrates the relationship between a norm (for example, a Frobenius norm) of the generator error ε before calibration and the norm of the generator error ε' after calibration according to the second embodiment.

When generating the graph 151, the information processing apparatus 100 randomly generates a generator error ε of the ZX90 gate. The generator error ε includes 15 types of random error components. The information processing apparatus 100 solves the linear equation using the generated generator error ε to determine the calibration quantum gates. The information processing apparatus 100 obtains a generator error ε' remaining in a quantum circuit that includes the ZX90 gate and the calibration quantum gates by numerical calculation. The information processing apparatus 100 repeats the above processing to generate a large number of samples. Equation (43) indicates the unitary matrix U before calibration and the unitary matrix U' after calibration of the ZX90 gate. $U = {e}^{- i \left(\frac{π}{4}ZX+ϵ\right)} , U ′ = {e}^{- i \left(\frac{π}{4}ZX+ϵ′\right)}$

The large number of generated samples are plotted in the graph 151. In the graph 151, the horizontal axis and the vertical axis are logarithmic scales. A straight line 152 indicates positions where the norm of the generator error ε and the norm of the generator error ε' are equal. A straight line 153 indicates positions where the square of the norm of the generator error ε is equal to the norm of the generator error ε'. As indicated by the graph 151, all the samples are plotted below the straight line 153. Accordingly, the graph 151 indicates that the first order component has been eliminated from the generator error ε by the calibration.

The information processing apparatus 100 may repeatedly evaluate and calibrate the generator error for the same target quantum gate. The first iteration of calibration eliminates the first order component from the generator error ε. When a target quantum gate to which calibration quantum gates have been added is executed and evaluated by the quantum computer 20, a generator error ε'₁ including a second or higher order component of the original generator error ε is calculated. The information processing apparatus 100 performs a second iteration of calibration using this generator error ε'₁. In theoretical terms, the second iteration of calibration eliminates the second order component of the original generator error ε from the generator error ε'₁.

In the second iteration of calibration, the information processing apparatus 100 does not need to increase the number of calibration quantum gates, and may update the coefficient parameter values of calibration quantum gates that have already been added. When the quantum computer 20 is caused to execute and evaluate a target quantum gate using updated calibration quantum gates, a generator error ε'₂ including third or higher order components of the original generator error ε is calculated. The information processing apparatus 100 performs the third iteration of calibration using this generator error ε'₂. In theoretical terms, the third iteration of calibration eliminates third order components of the original generator error ε from the generator error ε'₂.

In this way, when the evaluation and calibration of the generator error are iteratively performed, low-order components up to the Nth order of the original generator error ε are theoretically eliminated at the end of the Nth (N = 1, 2, 3, ...) calibration. In this way, the generator error ε' after calibration decreases in steps.

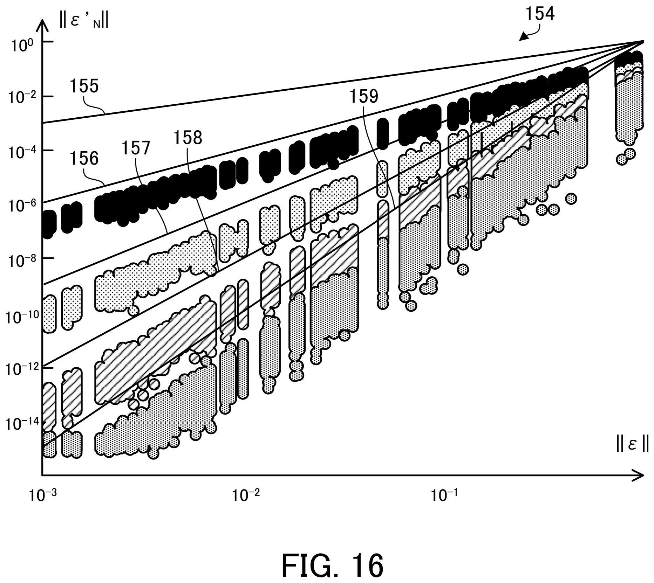

FIG. 16 is a graph depicting an example reduction in the post-calibration error. The graph 154 depicts the relationship between the norm of the generator error ε before calibration and the norm of the generator error ε'_{N} after the N^{th} calibration. Like the graph 151, the information processing apparatus 100 randomly generates the generator error ε of the ZX90 gate. The information processing apparatus 100 iteratively performs calibration according to the second embodiment. In the graph 154, a large number of generated samples are plotted.

The points included in the graph 154 are divided into four layers in the vertical direction. The uppermost layer indicates the relationship between the norm of the generator error ε and the norm of the generator error ε'₁ immediately after the first calibration. The second layer from the top indicates the relationship between the norm of the generator error ε and the norm of the generator error ε'₂ immediately after the second calibration. The third layer from the top indicates the relationship between the norm of the generator error ε and the norm of the generator error ε'₃ immediately after the third calibration. The bottom layer indicates the relationship between the norm of the generator error ε and the norm of the generator error ε'₄ immediately after the fourth calibration.

Like the graph 151, the horizontal axis and the vertical axis of the graph 154 are logarithmic scales. A straight line 155 indicates positions where the norm of the generator error ε and the norm of the generator error ε' are equal. A straight line 156 indicates positions where the square of the norm of the generator error ε and the norm of the generator error ε' are equal. A straight line 157 indicates positions where the cube of the norm of the generator error ε is equal to the norm of the generator error ε'. A straight line 158 indicates positions where the fourth power of the norm of the generator error ε is equal to the norm of the generator error ε'. A straight line 159 indicates a position where the fifth power of the norm of the generator error ε is equal to the norm of the generator error ε'.

As indicated in the graph 154, the points representing one iteration of calibration are plotted below the straight line 156. This means that the first-order components are eliminated from the generator error ε by one iteration of calibration. The points representing two iterations of calibration are plotted below the straight line 157. This means that the second order components are eliminated from the generator error ε by two iterations of calibration.

The points representing three iterations of calibration are plotted below the straight line 158. This means that the third order components are eliminated from the generator error ε by three iterations of calibration. The points representing four iterations of calibration are plotted below the straight line 159. This means that the fourth order components are eliminated from the generator error ε by four iterations of calibration.

Next, a supplementary description of evaluation of the generator error ε is given below. The information processing apparatus 100 collects test data by causing the quantum computer 20 to execute a quantum circuit including the target quantum gate and reading measurement values of qubits from the quantum computer 20. The information processing apparatus 100 estimates the generator error ε by analyzing this test data.

Examples of the evaluation method include quantum process tomography, GST, idle tomography (IT), HEAT, and randomized benchmarking. The information processing apparatus 100 may use any evaluation method so long as the generator error ε is finally acquired.

GST is also described in the following document: Erik Nielsen, John King Gamble, Kenneth Rudinger, Travis Scholten, Kevin Young, and Robin Blume-Kohout, "Gate Set Tomography", the Open Journal for Quantum Science, Volume 5, Page 557, October 2021.

When a certain evaluation method outputs evaluation information aside from the generator error ε, the information processing apparatus 100 may use a data analysis method like that described in the following document to convert the outputted evaluation information into the generator error ε. Takanori Sugiyama, Shinpei Imori, and Fuyuhiko Tanaka, "Reliable Characterization for Improving and Validating Accurate Quantum Operations", arXiv: 1806.02696, December 2020.

HEAT is also described in the following document: Neereja Sundaresan, Isaac Lauer, Emily Pritchett, Easwar Magesan, Petar Jurcevic, and Jay M. Gambetta, "Reducing Unitary and Spectator Errors in Cross Resonance with Optimized Rotary Echoes", PRX Quantum of the American Physical Society, Volume 1, Page 020318, December 2020.

Next, a supplementary description of determination of the control parameter values is given below. In tests using the quantum computer 20, a control parameter value θᵢₙ specified by the information processing apparatus 100 and a control parameter value θ realized by the quantum computer 20 may slightly differ due to performance limits of the control unit 22. In this case, it would be conceivable for the information processing apparatus 100 to try a control parameter value θ_{in,1} = θᵢₙ + δ that is larger than the control parameter value θᵢₙ by a minute amount δ and a control parameter value θ_{in,2} = θᵢₙ - δ that is smaller than the control parameter value θᵢₙ by the minute amount δ. By doing so, the information processing apparatus 100 acquires the generator error ε₁ corresponding to the control parameter value θ_{in,1} and the generator error ε₂ corresponding to the control parameter value θ_{in,2}.

The information processing apparatus 100 corrects the control parameter value θin from the control parameter values θ_{in,1} and θ_{in,2} and the generator errors ε₁ and ε₂ by the linear interpolation indicated in Equation (43). The information processing apparatus 100 designates a corrected control parameter value θᵢₙ to the control unit 22. ${θ}_{in} = \frac{{ϵ}_{1} {θ}_{2} - {ϵ}_{2} {θ}_{1}}{{ϵ}_{1} - {ϵ}_{2}}$

In the second embodiment, the realized control parameter value θ is linearly parameterized with respect to the generator, and the control parameter value θ exhibits affine behavior with respect to the input into the control unit 22. This means that the calibration method described above and linear interpolation have favorable compatibility.

The calibration method described above is also capable of calibrating a plurality of error components included in the generator error independently of each other. In this respect also, the calibration method according to the second embodiment and linear interpolation have favorable compatibility. This is because when a plurality of control parameters corresponding to a plurality of error components are not independent of each other, correction of a control parameter value to reduce a certain error component will affect another error component. Next, the functions and processing procedure of the information processing apparatus 100 will be described.

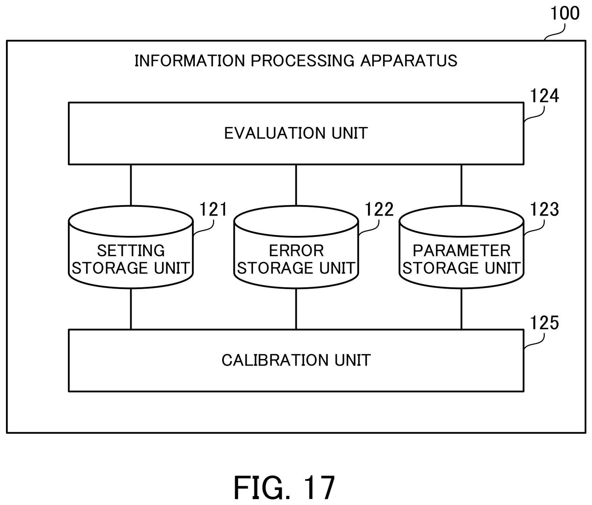

FIG. 17 is a block diagram depicting example functions of an information processing apparatus. The information processing apparatus 100 includes a setting storage unit 121, an error storage unit 122, a parameter storage unit 123, an evaluation unit 124, and a calibration unit 125. The setting storage unit 121, the error storage unit 122, and the parameter storage unit 123 are implemented using the RAM 102 or the HDD 103, for example. The evaluation unit 124 and the calibration unit 125 are implemented using the CPU 101 and a program, for example.

The setting storage unit 121 stores setting data relating to quantum gates. The setting data includes an ideal value of a generator of the target quantum gate and a generator of each calibration quantum gate candidate. In addition, the setting data includes control parameters of each quantum gate and data indicating a relationship between a rotational angle and control parameter values of each quantum gate. The error storage unit 122 stores error data indicating a generator error of the target quantum gate.

The parameter storage unit 123 stores parameter data indicating a calibration result. The parameter data includes the types of calibration quantum gate that have been selected. The parameter data includes a coefficient parameter value and an angle parameter value of each quantum gate. The parameter data may also include control parameter values indicating a waveform of a microwave pulse signal.

The evaluation unit 124 performs a test that causes the quantum computer 20 to execute the target quantum gate using the setting data stored in the setting storage unit 121. When doing so, the evaluation unit 124 may designate control parameter values to the quantum computer 20 using the parameter data stored in the parameter storage unit 123. The evaluation unit 124 acquires and analyzes test data and calculates a generator error of the target quantum gate. The evaluation unit 124 generates error data indicating the generator error and stores the error data in the error storage unit 122.

The calibration unit 125 calibrates the target quantum gate using the setting data stored in the setting storage unit 121 and the error data stored in the error storage unit 122. The calibration unit 125 generates parameter data indicating the calibration result and stores the parameter data in the parameter storage unit 123.

When doing so, the calibration unit 125 performs eigenvalue decomposition on the ideal value of the generator of the target quantum gate to generate functions cml and cmr for a first-order approximation. The calibration unit 125 uses the functions cml and cmr to generate a linear equation indicating a relationship whereby the generator error is canceled out by adjustment of the target quantum gate itself and the addition of calibration quantum gates. By solving the linear equation, the calibration unit 125 determines the adjustment amount of the target quantum gate, the type(s) of calibration quantum gate(s), and the rotational angle(s) of the calibration quantum gate(s). A linear solver may be used to solve the linear equation.

The information processing apparatus 100 outputs the calibration result. The information processing apparatus 100 may transmit control parameter values corresponding to the calibration result to the quantum computer 20. The information processing apparatus 100 may display the calibration result on the display apparatus 111 and may transmit the calibration result to another information processing apparatus, which is a classical computer.

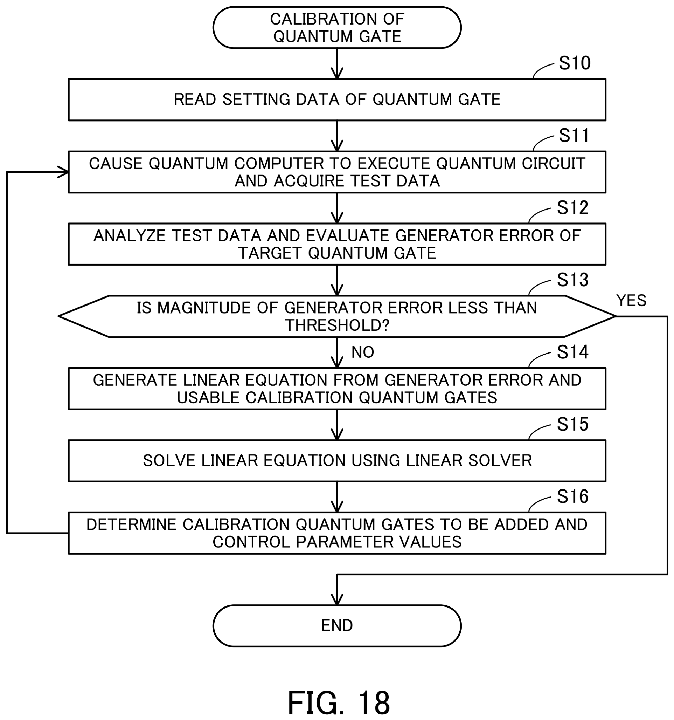

FIG. 18 is a flowchart depicting an example procedure of quantum gate calibration. In step S10, the evaluation unit 124 reads the setting data of the quantum gate. In step S11, the evaluation unit 124 generates a quantum circuit including the target quantum gate to be calibrated in accordance with the setting data, and causes the quantum computer 20 to execute the quantum circuit. The evaluation unit 124 acquires test data by reading the measurement value of qubits from the quantum computer 20.

In step S12, the evaluation unit 124 analyzes the test data and evaluates the generator error of the target quantum gate. In step S13, the calibration unit 125 determines whether the magnitude of the generator error is less than a threshold. When the magnitude of the generator error is less than the threshold, the quantum gate calibration ends. When the magnitude of the generator error is equal to or larger than the threshold, the processing proceeds to step S14. Note that the calibration unit 125 may determine whether the accuracy of the target quantum gate is sufficient by another determination method.

In step S14, the calibration unit 125 generates, from the generator error and the usable calibration quantum gates, a linear equation indicating a relationship in which the generator error is canceled out. When doing so, the calibration unit 125 performs eigenvalue decomposition on the ideal value of the generator of the target quantum gate, and generates an approximation function for linear approximation using eigenvalues and the projection matrix. In step S15, the calibration unit 125 solves the linear equation using a linear solver. However, the calibration unit 125 may analytically solve the linear equation using an inverse matrix of a coefficient matrix.

In step S16, the calibration unit 125 determines the calibration quantum gates to be added to the target quantum gate from the solution of the linear equation. The calibration unit 125 also determines the control parameter values of the target quantum gate and the control parameter values of the calibration quantum gates from the solution of the linear equation so as to realize a specific rotational angle. The calibration unit 125 transmits the control parameter values to the quantum computer 20. The processing then returns to step S11.

As described above, the information processing apparatus 100 according to the second embodiment evaluates the error of the target quantum gate and calibrates the target quantum gate so as to reduce the error. By doing so, the accuracy of the quantum operation of the quantum computer 20 is improved. The information processing apparatus 100 also adds calibration quantum gates to the target quantum gate and causes the quantum computer 20 to integrally execute the target quantum gate and the calibration quantum gates. By doing so, error components that would be difficult to cancel out by merely optimizing the control parameters of the target quantum gate are also reduced, which improves the calibration accuracy.

The information processing apparatus 100 also generates the functions cml and cmr for linear approximation by eigenvalue decomposition of the generator of the target quantum gate, and generates a linear equation using the functions cml and cmr. By doing so, it is simple for the information processing apparatus 100 to approximate the influence of calibration quantum gates even when the generator is non-commutative, making it possible to efficiently determine the calibration quantum gates.

The information processing apparatus 100 calibrates a plurality of error components included in the generator error independently of each other using different parameters. This makes it possible for the information processing apparatus 100 to calibrate the target quantum gate more efficiently than when dependencies exist between error components. The information processing apparatus 100 may add calibration quantum gates with symmetric parameters before and after the target quantum gate to cope with a specific error component. By doing so, the information processing apparatus 100 is capable of accurately canceling out the specific error component.

In addition, the information processing apparatus 100 reduces the order of the remaining generator error in steps through iterative execution of evaluation and calibration of the target quantum gate. By doing so, the calibration accuracy is improved, and it is easy to determine the timing at which the calibration process is to be stopped.

In one aspect, the calibration accuracy of a quantum gate is improved.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. A computer program that causes a computer to perform a process comprising:
acquiring error data (14) indicating an error of a first quantum gate (13a);
generating, using an approximation function (15) that linearly approximates an influence of an additional quantum gate, which is to be added to the first quantum gate, on an operation of the first quantum gate, a linear equation (16) which includes a variable corresponding to the additional quantum gate and indicates a relationship in which the error is canceled by the additional quantum gate; and
determining a second quantum gate (13b) corresponding to the additional quantum gate by solving the linear equation for the variable.

2. The computer program according to claim 1, wherein the generating includes decomposing a matrix (A) indicating the first quantum gate into a plurality of eigenvalues (aⱼ) and a plurality of projection matrices (Pⱼ), and generating the approximation function (cml, cmr) using the plurality of eigenvalues and the plurality of projection matrices.

3. The computer program according to claim 1 or 2, wherein
the additional quantum gate is a rotation gate (138, 139) for rotating a quantum state by a predetermined angle (θ_{Z}, θ_{Y}) around a predetermined rotation axis, and
the variable indicates the predetermined angle.

4. The computer program according to any of the preceding claims, wherein
the second quantum gate includes a third quantum gate (135) added before the first quantum gate and a fourth quantum gate (136) added after the first quantum gate, and
the third quantum gate and the fourth quantum gate are quantum gates of a same type with symmetrical parameter values (+θ_{Y}, -θ_{Y}).

5. The computer program according to any of the preceding claims, wherein
the linear equation further includes another variable (ΔA) corresponding to a control parameter for controlling the operation of the first quantum gate, and
the determining includes determining a value of the control parameter by solving the linear equation for the other variable.

6. The computer program according to any of the preceding claims, wherein the process further includes:
acquiring other error data indicating an error of a quantum circuit including the first quantum gate and the second quantum gate, updating the linear equation using the other error data, and changing the second quantum gate by solving the updated linear equation (S12, S14 to S16).

7. A quantum gate calibration method executed by a computer, the quantum gate calibration method comprising:
acquiring error data (14) indicating an error of a first quantum gate (13a);
generating, using an approximation function (15) that linearly approximates an influence of an additional quantum gate, which is to be added to the first quantum gate, on an operation of the first quantum gate, a linear equation (16) which includes a variable corresponding to the additional quantum gate and indicates a relationship in which the error is canceled by the additional quantum gate; and
determining a second quantum gate (13b) corresponding to the additional quantum gate by solving the linear equation for the variable.

8. An information processing apparatus comprising:
memory means (11) for storing error data (14) indicating an error of a first quantum gate (13a); and
processing means (12) for:
generating, using an approximation function (15) that linearly approximates an influence of an additional quantum gate, which is to be added to the first quantum gate, on an operation of the first quantum gate, a linear equation (16) which includes a variable corresponding to the additional quantum gate and indicates a relationship in which the error is canceled by the additional quantum gate; and
determining a second quantum gate (13b) corresponding to the additional quantum gate by solving the linear equation for the variable.
